# EUROPEAN PATENT APPLICATION

(11) **EP 1 359 558 A2**
(43) Date of publication of application: **05.11.2003**
(21) Application number: 03101026.7
(22) Date of filing: 15.04.2003
(51) Int. Cl.: G09B 9/00

(54) **Apparatus and method for vehicle simulation**

(30) Priority: 19.04.2002 GB 0209041
(71) Applicant: Thales Plc, Fleet, Hampshire GU51 3NY (GB)
(72) Inventor: BALL, Alan Edward, 94117 CX, ARCUEIL (FR); WHITE, David John, 94117 CX, ARCUEIL (FR)
(74) Representative: Lucas, Laurent

(57) **Abstract**

The invention relates to systems and methods for implementing vehicle simulation. The present invention also relates particularly, though not exclusively, to flight/aircraft simulation. In a first of its aspects the present invention may provide a detachable signal interface unit for use in a vehicle simulation system having a vehicle simulator unit for providing a vehicle simulation environment and simulation control means for generating vehicle simulator control signals remotely from said vehicle simulator unit and remotely from said detachable signal interface unit, wherein the detachable signal interface unit includes:
control signal input means for receiving simulator control signals from said remote simulation control means, signal conditioning means for conditioning said received control signals into a form compatible with said vehicle simulator unit, and control signal output means for outputting conditioned simulator control signals;
attachment means for detachably attaching the signal interface unit to said vehicle simulator unit such that said control signal output means interface with signal input means of said vehicle simulator unit.

## Description

The invention relates to systems and methods for implementing vehicle simulation. The present invention also relates particularly, though not exclusively, to flight/aircraft simulation.

Commercial and/or military vehicles (e.g. aircraft) typically have a long service life-span during which advances in technology, or changes in regulatory requirements, result in modifications and upgrades of a given vehicle. These modifications or updates typically require vehicle controllers (e.g. aircraft pilots) to retrain in accordance with such modifications or updates using simulators arranged to simulate the modified vehicles.

Vehicles such as aircraft, for example, often employ items of apparatus traditionally known as "black-boxes". This terminology has been used in the art to refer to any self-contained or enclosed article of aircraft circuitry (e.g. in a box) which is able to be easily detachably attached (in whole) to other circuitry within the aircraft so as to perform a predetermined type of e.g. aircraft control function (or the like). Typically such black-boxes have a predetermined function in an aircraft and, in use, may be "plugged-in" to the circuitry of an aircraft so as to be able to receive certain signals from various other components of the aircraft, to process those signals using software means, and to output signals in response as part of the function of the black box.

One well-known type of "black-box" is a flight recorder box, but the terminology extends to any other detachable self-contained circuitry irrespective of its intended function.

Vehicle simulators, such as aircraft simulators, typically employ components the same (or similar) to those associated with the immediate controls (e.g. the cockpit) of the vehicle to be simulated, this includes "black-boxes" associated with the simulated vehicle. During simulation runs, the black-boxes used in the simulator set-up are fed simulated input signals representing the type of signals that black-box in question would receive from the real vehicle in use - such as signals pertaining to the condition of distant parts (e.g. wing flap positions) of an aircraft in use, but obviously, in a simulator set-up there are no wings, thus such input signals have to be simulated.

Thus, the signals that a black-box "expects" to see must, in a simulator, be simulated. In other words, those parts of the vehicle being simulated which are not present in the simulator set-up (e.g. wing flaps) must be simulated in terms of the control signals they could provide if they were present.

Typically, existing simulator set-ups require extensive signal conditioning hardware to be provided for receiving simulated control signals from e.g. a computer arranged to generate such signals, for conditioning those signals into a form suitable for input to whatever black-boxes are in use in the simulator set-up, and for inputting those conditioned signals into the appropriate signal inputs of the various black boxes of the simulator. The conditioning hardware also receives signals output from black boxes, and conditions them into a form suitable for receipt by the computer which generated the simulated control signals.

The signal conditioning is external/separate from the black box and often consumes space on the simulator platform.

A flight simulator is typically required to run flight simulations lasting approximately three hours. Once a given simulation is completed the flight simulator is often required to be reconfigured in order to be able to simulate a different or modified aircraft during the subsequent simulation run. Changing the simulation characteristics of a simulator may require a corresponding change in the software component contained within one or more "black-boxes" employed in the simulator (thereby changing their function). Such a software change can be achieved either by re-programming the software within the black-boxes (provided there is the means to do so) or by removing black-boxes and replacing them with different suitably programmed black-boxes.

However, the reprogramming/reloading of black-box software typically takes a relatively long time during which the flight simulator associated with the black-boxes being reprogrammed is unable to function. This situation is inefficient in terms of flight simulator usage, is inconvenient for flight simulator users and is economically costly to commercial flight simulation providers since flight simulation services must be interrupted during software reloading. Similarly, the alternative of providing a library of many uniquely pre-programmed black-boxes, covering all possible vehicle variants, is also undesirable due to the high cost of each such black-box.

The present invention aims to overcome at least some of the aforementioned deficiencies in the prior art.

At its most general, the present invention proposes simulating the black-boxes employed in a simulator platform by separating the software and software executing components of the simulated black-box from interface hardware components which provide the signal interface between the simulated black box and the simulator platform.

The separated software execution may be performed on non-specialist computing hardware such a Personal Computer (PC), which can readily store, and rapidly switch between, multiple versions of software representing different black-box functions/types, and may be located remotely from the simulation platform.

Thus, by separating the software executing components of a black-box from the signal interface components, one may simulate different black box functions simply by changing the software component of the simulated box so as to produce the appropriate different/changed simulated black-box function. This requires no change in the interface hardware of the simulated black-box.

The invention may thereby provide all of the on-platform functionality required of a black-box through the interface hardware part of the simulated black box and may permit the interface hardware to be pre-configured or pre-tested prior to installation/connection to a simulator platform. This pre-configuration may include pre-configuration of some, any or all of the various hardware components that may be housed within the interface hardware part of the simulated black-box.

One or more different simulation codes/models may be stored and executed at a single remote location connected to one or more separate simulator platforms via one or more respective interface hardware parts.

The invention also proposes to retain signal conditioning hardware within the signal interface hardware rather than externally as is typically done at present. This not only saves space on or about a simulator platform but also permits signal conditioning hardware to be pre-configured when the interface hardware part (of which it forms a part) is pre-configured as discussed above.

The hardware interface component of the simulated black-box may thus replicate the physical size and shape of existing black-boxes, and provide signal interfaces replicating those of existing black-boxes. Thus, the simulated black-box may easily replace existing black-boxes.

In the following, the terms "vehicle simulator platform" and "vehicle simulator unit" are intended to be synonymous.

In a first of its aspects the present invention may provide a detachable signal interface unit for use in a vehicle simulation system having a vehicle simulator unit for providing a vehicle simulation environment and simulation control means for generating vehicle simulator control signals remotely from said vehicle simulator unit and remotely from said detachable signal interface unit, wherein the detachable signal interface unit includes:
control signal input means for receiving simulator control signals from said remote simulation control means, signal conditioning means for conditioning said received control signals into a form compatible with said vehicle simulator unit, and control signal output means for outputting conditioned simulator control signals;
attachment means for detachably attaching the signal interface unit to said vehicle simulator unit such that said control signal output means interface with signal input means of said vehicle simulator unit.

Thus, physical separation of control signal generating components (e.g. software/model executing parts) from signal interface hardware is achieved. A control signal input means of the signal interface unit allows reception of control signals from a remote simulation control means (e.g. remote computer). The input means is preferably arranged to perform any necessary signal interfacing/processing/conditioning required between the remote simulation control means and the signal conditioning means. For example, the input means may process control signals from the remote simulation control means into a form suitable for the signal conditioning means of the signal interface unit.

For example, where the control signals are relayed from the remote simulation control means to the signal interface unit via a data network, the control signal input means may include a network interface means for receiving network data/signals and for rendering them compatible with subsequent interface hardware and interfacing processes of the signal interface unit.

The detachable signal interface unit preferably comprises:
response signal input means for receiving simulator response signals from signal output means of said vehicle simulator unit;
said signal conditioning means being operable to condition received simulator response signals in to a form compatible with said remote simulation control means; and,
response signal output means for outputting conditioned simulator response signals;
wherein said attachment means is arranged to detachably attach the signal interface unit to said vehicle simulator unit such that said response signal input means interfaces with said signal output means of said vehicle simulator unit.

Thus, the simulator unit (e.g. simulator platform/cockpit) may generate data/signals in response to simulation control signals input thereto and in response to user inputs (e.g. pilot response inputs) via the controls of the simulator unit for example (e.g. cockpit controls etc.). These response signals may be employed in controlling the simulator unit and may therefore be conveyed to the remote simulation control means preferably via the signal interface unit. The response signal output means may include interface means for rendering response signals to be output to the remote simulation control means into a form suitable for output thereto, such as into a form compatible with any signal relay means used to relay signals from the signal interface unit to the remote simulation control means.

To this extent the response signal output means may be arranged to perform a reverse/reciprocal function to that of the control signal input means of the signal interface unit.

The detachable signal interface unit may be employed in conjunction with any type of signal communication/relay methods or techniques for relaying signals to and from the remote simulation control means as would be readily apparent to the skilled person.

The control signal input means and response signal output means of the detachable signal interface unit may be suitably compatible with such methods or techniques. Preferably, a digital data network is employed to relay data/signals between the detachable signal interface unit and the remote simulation control means.

It is intended that the detachable signal interface unit may be provided (e.g. for sale) in conjunction with signal relay means for relaying signals between the signal interface unit and any remote simulation control means. It is intended that the detachable interface unit and the signal relay means may be provided in an un-assembled form, such as in kit-form for subsequent assembly.

In a second of its aspects, the present invention may provide a kit of parts comprising parts for use in a vehicle simulation system having a vehicle simulator unit for providing a vehicle simulation environment, wherein the kit of parts includes:
a detachable signal interface unit having control signal input means for receiving simulator control signals from said remote simulation control means, signal conditioning means for conditioning said received simulator control signals into a form compatible with said vehicle simulator unit, control signal output means for outputting conditioned simulator control signals, and attachment means for detachably attaching the signal interface unit to said vehicle simulator unit such that said control signal output means interface with signal input means of said vehicle simulator unit;
signal relay means arranged to relay simulator control signals between said remote simulation control means and said detachable signal interface unit; and
simulation control means for generating vehicle simulator control signals remotely from said vehicle simulator unit.

The kit of parts may be such that said detachable signal interface unit includes:
response signal input means for receiving simulator response signals from signal output means of said vehicle simulator unit;
said signal conditioning means being operable to condition received simulator response signals in to a form compatible with said remote simulation control means; and,
response signal output means for outputting conditioned simulator response signals;
wherein said attachment means is arranged to detachably attach the signal interface unit to said vehicle simulator unit such that said response signal input means interfaces with said signal output means of said vehicle simulator unit.

The kit of parts may include a signal relay means arranged to transfer said conditioned simulator response signals between said detachable signal interface unit and said remote simulation control means.

The signal relay means of the kit of parts may comprise one or more fibre-optic cables. The signal relay means is preferably operable to transfer simulator control signals and/or conditioned simulator response signals between said remote simulation control means and a plurality of separate signal interface units. The signal relay means may comprise one or more duplex fibre-optic cables.
Preferably, the signal relay means is arranged to implement a digital data network, or forms at least part of such a network.

In a third of its aspects, the present invention may provide apparatus for controlling a vehicle simulator unit for providing a vehicle simulation environment the apparatus comprising:
simulation control means for generating simulator control signals remotely from said vehicle simulator unit;
a detachable signal interface unit including control signal input means for receiving simulator control signals remotely from said simulation control means, signal conditioning means for conditioning said received simulator control signals into a form compatible with said vehicle simulator unit, control signal output means for outputting conditioned simulator control signals, and attachment means for detachably attaching the signal interface unit to said vehicle simulator unit such that said control signal output means interface with signal input means of said vehicle simulator unit;
signal relay means arranged to relay simulator control signals between said remote simulation control means and said signal interface unit.

The simulation control means is preferably arranged to execute (and preferably store) one or more vehicle simulation computer program codes for generating simulator control signals, which signals may then be relayed to the remote detachable signal interface unit via the signal relay means.

The detachable signal interface unit of the apparatus may further comprise:
response signal input means for receiving simulator response signals from signal output means of said vehicle simulator unit;
said signal conditioning means being operable to condition received simulator response signals in to a form compatible with said remote simulation control means; and,
response signal output means for outputting conditioned simulator response signals;
wherein said attachment means is arranged to detachably attach the signal interface unit to said vehicle simulator unit such that said response signal input means interfaces with said signal output means of said vehicle simulator unit. Thus, the simulator response signals may be output to the remote simulation control means, being relayed thereto via the relay means, for use in controlling the simulation environment provided by the simulator unit. The simulation control means may process the received response signals in accordance with the simulation model being executed thereby, and generate control signals accordingly. Thus, the relay means may act as a part of a feed-back mechanism for the updating of control signals.

The signal relay means of the apparatus is preferably arranged to transfer said conditioned simulator response signals between said detachable signal interface unit and said remote simulation control means.

The computer program codes/means could be implemented with any programming language such as C, C++, PASCAL, Ada, or with a scripting language or via a binary emulator or translator.

Similarly, the simulation control means may include any type of personal computer, network computer, workstation, minicomputer, mainframe, or other computer running any version of Windows, MacOS, BeOS, Linux, UNIX, Solaris or any other operating system.

Further, the signal relay means may employ any number of conventional techniques for data transmission, signaling, data processing, network control, and the like. The signal relay means may employ radio frequency (RF) or other wireless techniques in addition to, or in place of, any network technique described herein.

The apparatus may comprise a plurality of separate said detachable signal interface units wherein said signal relay means is operable to transfer simulator control signals and/or conditioned simulator response signals between said simulation control means and said plurality of separate detachable signal interface units.

Thus, an immediate benefit resulting from the separation of software and interface hardware components, as the present invention provides, is the ability to service a plurality of different interface units using one simulation control means rather than requiring a dedicated simulation control means for each such interface unit as required in prior art systems. The plurality of separate interface units may be connected/attached to one or more simulator units thereby allowing simulator units to run independently of each other in parallel.

The simulation control means is preferably operable to provide vehicle simulator control signals simultaneously to at least some of said plurality of separate detachable signal interface units via said signal relay means thereby to control simultaneously a plurality of separate vehicle simulator units.

The remote simulation control means may be operable to execute simultaneously or sequentially a plurality of different vehicle simulation computer program means corresponding to different vehicle simulation models, and to generate corresponding different simulator control signals thereby to control simultaneously or sequentially said plurality of separate vehicle simulator units according to said different simulation models.

The signal relay means of the apparatus may comprise one or more fibre-optic cables and/or may form a digital communications network. The fibre-optic cable(s) are preferably duplex cables.

In a fourth of its aspects, the present invention may provide a method of vehicle simulation for use in a vehicle simulation system having a vehicle simulator unit for providing a vehicle simulation environment and simulation control means for generating vehicle simulator control signals remotely from said vehicle simulator unit
wherein the method includes:
detachably attaching to signal input means of said vehicle simulator unit a signal interface unit being remote from said simulation control means;
generating simulator control signals at said remote simulator control means;
inputting said simulator control signals to said signal interface unit for signal conditioning thereby;
conditioning said input simulator control signals into a form compatible with said vehicle simulator unit;
outputting conditioned simulator control signals from said signal interface unit for input to said signal input means of said vehicle simulator unit thereby with said simulation control means to remotely control via said signal interface unit said simulation environment provided by said vehicle simulator unit.

The method preferably further comprises:
receiving simulator response signals from signal output means of said vehicle simulator unit;
condition received simulator response signals in to a form compatible with said remote simulation control means; and,
outputting conditioned simulator response signals from said detachably attached signal interface unit for input to said remote simulation control means.

Simulator control signals are preferably input to, and/or said conditioned simulator response signals are preferably output from, a plurality of separate said detachably attached signal interface units according to the method.

Simulator control signals may be input simultaneously to, and/or said conditioned simulator response signals may be output simultaneously from, at least some of a plurality of separate signal interface units being detachably attached to separate respective vehicle simulator units thereby to control simultaneously a plurality of separate vehicle simulator units.

The method may further comprise:
executing simultaneously or sequentially via said remote simulation control means a plurality of different vehicle simulation computer program means corresponding to different vehicle simulation models to generate corresponding different simulator control signals;
controlling simultaneously or sequentially said plurality of separate vehicle simulator units using said corresponding different simulator control signals.

The simulator control signals may be input to, and/or said conditioned simulator response signals may be output from, said plurality of separate detachably attached signal interface units via a digital communications network.

The present invention, in accordance with any of its first, its second or its third aspects, may further comprise said vehicle simulator unit(s). Preferably, the vehicle simulator unit(s) possesses socket means dimensioned to provide a receiving cavity/space within which said detachable interface unit may be received in detachable attachment to said vehicle simulator unit(s) whereby portions of said socket means correspond reciprocally with, and are placed in intimate opposition to, portions of said detachable signal interface unit when received within said socket means.

Thus, the dimensions of the attachment means of the detachable interface unit, in any aspect of the invention, may be dimensioned to permit it to attach to (and form a data interface with) the input-output means of existing vehicle simulator units which are arranged to receive existing "black-box" type units. This permits the present invention to be applied directly to existing vehicle simulator units (platforms) without the need to use intermediate adaptors or the like.

A plurality of data inputs and outputs may be formed by such an interface having any number of separate signal input/output sockets/channels for inputting/outputting control/response signals.

It will be appreciated that the variants, alternatives and preferable features described above in respect of any one of the aspects of the present invention may be similarly applied as a variant, alternative or preferable feature of any other aspect of the invention.

The simulation control means of the present invention, in any of its aspects, may be arranged to provide flight simulation control signals for use in aircraft/flight simulation. The simulation control means, in such cases, may be arranged to simulate (and to generate simulator control signals accordingly) one or more of: a flight management system; a flight guidance system; an aircraft display system; a flight control system; a mission system; a communications system; a warning system; an electronic indication system. Other components of an aircraft system, or other functionalities of black-boxes thereof, may be simulated as would be readily apparent to the skilled person.

There now follow examples of the present invention with reference to the accompanying drawings of which:
Figure 1 is a block diagram of apparatus for controlling a vehicle simulation unit;
Figure 2 is a block diagram of apparatus for controlling a vehicle simulation unit illustrating the hardware architecture thereof;
Figure 3 is a block diagram of a software architecture of a simulation control unit for a vehicle simulation system.

For the sake of consistency, like reference numerals are used in the drawings to identify like parts.

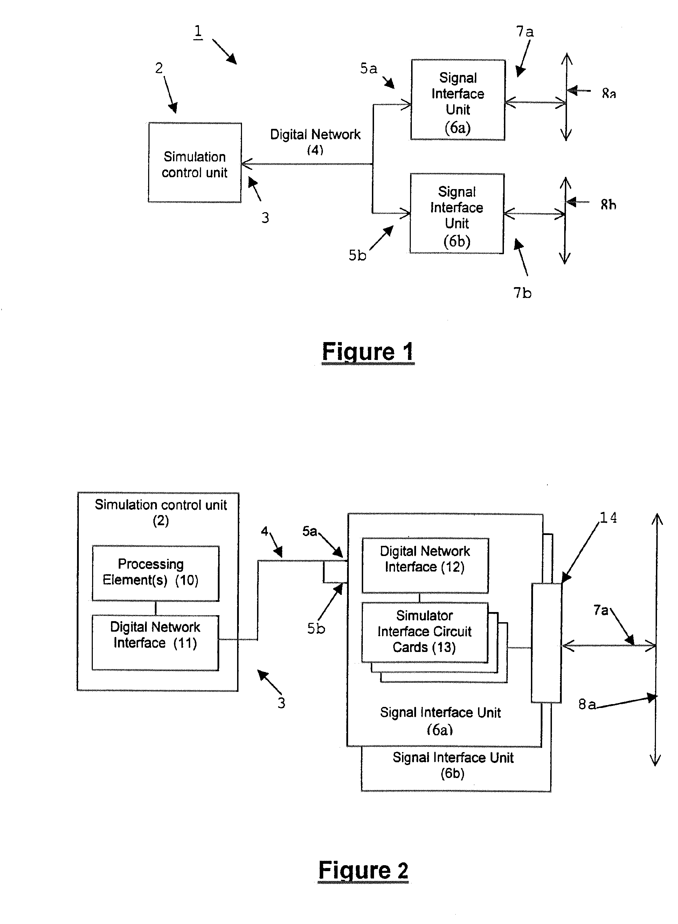

Referring to Figure 1, there is illustrated a flight simulation system 1 comprising a remote simulation control unit 2, a signal relay means in the form of a digital communications network 4, a first and a second signal interface unit 6a and 6b respectively, and two respective separate flight simulator platforms (not shown). The first and second signal interface units 6a and 6b are each connected to respective signal input/output means 7a and 7b of the two separate flight simulator platforms, the signal busses of which are illustrated by the schematic items 8a and 8b respectively of Fig.1.

It is to be understood that, in alternative arrangements, the two signal interface units 6a and 6b could be connected to the same one flight simulator platform such that the signal input/output means 7a and 7b thereof connect with a signal bus (or busses) of the same one flight simulator platform.

The simulation control unit 2 includes a simulation control computer system in which is stored a plurality of computer programs and software codes representing a plurality of different black-box simulation models. Upon executing such computer program simulation models (e.g. different models simultaneously), the simulation control computer system generates simulation control signals and outputs such signals to the digital communications network 4 at a digital communications network input/output connection 3 via which the latter is connected to the former.

The digital communications network 4 comprises a gigabit Ethernet digital network employing duplex fibre-optical cables for the transmission of signals. The construction and operation of the digital communications network 4, as illustrated in Fig.1, may be such as would be readily apparent to a person skilled in the art and consequently shall not be described in detail here.

The digital communications network 4 is arranged to relay simulation control signals from the simulation control unit 2 to a signal input/output 5a of the first signal interface unit 6a and to relay simulation control signals to a signal input/output 5b of the second signal interface unit 6b. Upon receipt of simulation control signals each of the first and second signal interface units is arranged to perform signal conditioning of each of the respective simulation control signals so received such as is necessary to convert the received control signals into a format compatible with and suitable for receipt by the flight simulator platform to which the given interface unit is detachably attached.

Conditioned signals are output from each of the signal interface units 6a and 6b to respective input/output means 7a and 7b of the associated flight simulator platform, and thence to respective data busses (8a and 8b) thereof for use in controlling the simulation environment provided by each such platform in accordance with the black-box simulation computer models from which the simulation control signals derive.

Simulator response signals may be generated by hardware and/or software elements within the flight simulator platforms either in response to simulation control signals emanating from the simulation control unit, and/or independently of simulation control signals. For example, cockpit control signals emanating from the cockpit of the simulator platform may be generated in response to a user's use of cockpit/flight controls therein.

Such simulator response signals are separately passed to the input/output means 7a and 7b of associated separate simulator platforms from data busses 8a and 8b thereof. The signal interface units 6a and 6b separately receive such response signals and condition them into a form suitable for processing by the remote simulation control unit 2. Response signals so conditioned are subsequently passed to the digital communications network 4 via the signal input/output 5a and 5b of respective signal interface units 6a and 6b for subsequent transmission to the remote simulation control unit 2.

Simulator response signals received by the simulation control unit 3 are then interpreted and used thereby in suitably controlling (in accordance with associated simulation models executed thereby) the flight simulation platform from which the simulator response signals emanated.

In particular, attachment means are provided via which each of the signal interface units (6a and 6b) are separately detachably attached to a respective flight simulator platform, provide a physical linkage and data transfer interface which reciprocally corresponds in its physical dimensions, form and attributes to the corresponding physical dimensions, form and attributes of signal input/output means of a flight simulator platform. The signal interface unit may thus replicate the physical size and shape of existing black-boxes, and provide signal interfaces replicating those of existing black-boxes.
Thus, the simulated black-box may easily replace existing black-boxes.

To this extent, each signal interface unit (6a or 6b) may simply be "plugged-in" to the signal input/output means of a respective flight simulator platform so as to form a data transfer connection (7a or 7b respectively) between the given signal interface unit and the respective input/output means of the vehicle simulator unit to which it is connected.

Figure 2 illustrates the vehicle simulation system in greater detail. The simulation control unit 2 includes processing element(s) 10 being part of the means for executing the aforementioned vehicle simulation computer program models for the generation of simulation control signals. The processing element(s) 10 is arranged to pass simulation control signals to a digital network interface 11 whereby the control signals are converted into a format suitable for transmission across the digital communications network 4 of the system to one or more signal interface units such as signal interface units 6a or 6b.

Similarly, simulator response signals emanating from a signal interface unit and received at the digital network interface 11 are converted thereby into a form suitable for processing by the processing element(s) 10 of the simulation control unit.

The signal interface unit 6a also contains digital network interface 12 which is arranged to convert control signals (or response signals) received from the digital communications network 4 (or a signal conditioning means) into a format or form suitable for subsequent processing by signal conditioning means of the signal interface unit (or into a format suitable for relay across the digital communications network 4).

The digital network interface unit 12 is also arranged to convert response signals received from the signal conditioning means into a format suitable for relay across the digital communications network 4 to the remote simulator control means.

Signal conditioning is performed via one or more simulator interface circuit cards 13 of the signal interface unit which operate to perform the required signal conditioning (Of both simulator control signals or simulator response signals). Where the signals in question are simulator control signals, the conditioned signals are directed to an attachment means 14 of the given signal interface unit, the attachment means being dimensioned to detachably attach the signal interface unit to the input/output means 7a of the associated flight simulator unit such that a data transfer interface is formed. Alternatively, or additionally, where the conditioned signals in question are simulator response signals, those signals are directed to the digital network interface 12 for subsequent relay to the remote simulation control means 2.

It will be appreciated that the functionality and general hardware arrangement of the second signal interface unit 6b is substantially identical to the hardware arrangement employed in the signal interface unit 6a illustrated in Figure 2.

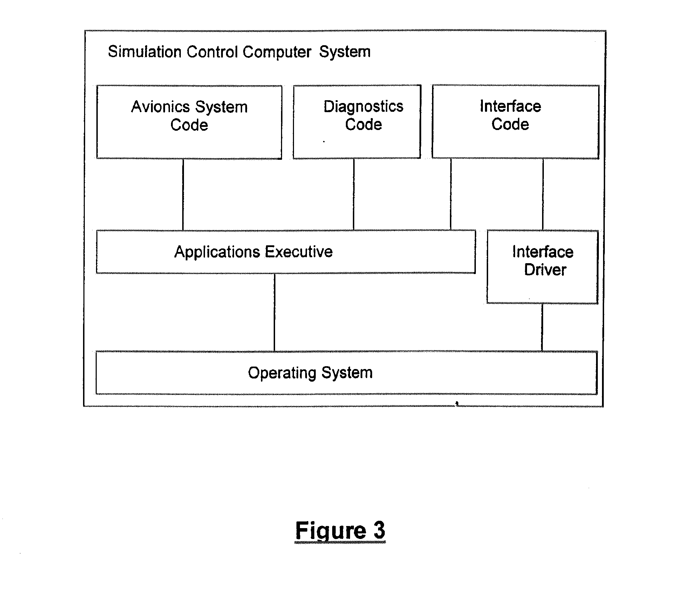

Figure 3 schematically illustrates the architecture of the software employed in the simulation control computer system of the remote simulation control unit 2. An avionics system code provides one or more distinct computer program codes representing different/modified black-box simulation models. A diagnostics code is also provided for the purposes of systems diagnostics, while an interface code is provided for controlling: the digital network interface elements of both the simulator control unit and signal interface units (11 and 12); the simulator interface circuit cards 13 of the signal interface unit; and, the associated signal interface units respectively via an interface driver.

An applications executive controls execution of each of the avionics system code, the diagnostics code and the interface code. Both the applications executive and the interface driver may be supported by a mutual operating system. The operating system of the simulation control computer system may be omitted where the application executive is capable of running over a bare-board, that is to say, it may be run directly on the computer processor without an intermediate operating system

Thus the simulation control computer system may store and execute one or a plurality of different avionics system software codes and is able to generate corresponding simulation control signals and communicate such signals to a given flight simulation platform via the digital network 4 and the one or more separate signal interface units 6a and 6b. The simulation control computer system may also receive associated response signals from a plurality of simulator platforms for use in further controlling those simulator platforms.

Signal addressing techniques may be employed to ensure that control signals emanating from the remote simulation control means reach the intended destination signal interface unit, and to ensure that the remote simulation control means is able to identify which signal interface unit a given received response signal came from. Signal addressing techniques and apparatus (e.g the network interface units) such as would be apparent to the skilled person may be used.

While the various aspects of the present invention have been described herein in terms of functional block components and various processing steps, it will be appreciated that such functional blocks may be realized by any number of hardware and/or software components configured to perform the specified functions.

The invention may include any variations, modifications and alternative applications of the above embodiments, as would be readily apparent to the skilled person without departing from the scope of the present invention in any of its aspects.

## Claims

1. A detachable signal interface unit for use in a vehicle simulation system having a vehicle simulator unit for providing a vehicle simulation environment and simulation control means for generating vehicle simulator control signals remotely from said vehicle simulator unit and remotely from said detachable signal interface unit, wherein the detachable signal interface unit includes:
control signal input means for receiving simulator control signals from said remote simulation control means, signal conditioning means for conditioning said received control signals into a form compatible with said vehicle simulator unit, and
control signal output means for outputting conditioned simulator control signals;
attachment means for detachably attaching the signal interface unit to said vehicle simulator unit such that said control signal output means interface with signal input means of said vehicle simulator unit.

2. A detachable signal interface unit according to Claim 1 further comprising:
response signal input means for receiving simulator response signals from signal output means of said vehicle simulator unit;
said signal conditioning means being operable to condition received simulator response signals in to a form compatible with said remote simulation control means; and,
response signal output means for outputting conditioned simulator response signals;
wherein said attachment means is arranged to detachably attach the signal interface unit to said vehicle simulator unit such that said response signal input means interfaces with said signal output means of said vehicle simulator unit.

3. A kit of parts comprising parts for use in a vehicle simulation system having a vehicle simulator unit for providing a vehicle simulation environment, wherein the kit of parts includes:
a detachable signal interface unit having control signal input means for receiving simulator control signals from said remote simulation control means, signal conditioning means for conditioning said received simulator control signals into a form compatible with said vehicle simulator unit, control signal output means for outputting conditioned simulator control signals, and attachment means for detachably attaching the signal interface unit to said vehicle simulator unit such that said control signal output means interface with signal input means of said vehicle simulator unit;
signal relay means arranged to relay simulator control signals between said remote simulation control means and said detachable signal interface unit; and
simulation control means for generating vehicle simulator control signals remotely from said vehicle simulator unit.

4. A kit of parts according to Claim 3 in which said detachable signal interface unit includes:
response signal input means for receiving simulator response signals from signal output means of said vehicle simulator unit;
said signal conditioning means being operable to condition received simulator response signals in to a form compatible with said remote simulation control means; and,
response signal output means for outputting conditioned simulator response signals;
wherein said attachment means is arranged to detachably attach the signal interface unit to said vehicle simulator unit such that said response signal input means interfaces with said signal output means of said vehicle simulator unit.

5. A kit of parts according to Claim 4 in which said signal relay means is arranged to transfer said conditioned simulator response signals between said detachable signal interface unit and said remote simulation control means.

6. A kit of parts according to any of claims 3 to 5
wherein said signal relay means comprises one or more fibre-optic cables.

7. A kit of parts according to any of claims 4 to 6
wherein said signal relay means is operable to transfer simulator control signals and/or conditioned simulator response signals between said remote simulation control means and a plurality of separate signal interface units.

8. Apparatus for controlling a vehicle simulator unit for providing a vehicle simulation environment the apparatus comprising:
simulation control means for generating simulator control signals remotely from said vehicle simulator unit;
a detachable signal interface unit including control signal input means for receiving simulator control signals remotely from said simulation control means, signal conditioning means for conditioning said received simulator control signals into a form compatible with said vehicle simulator unit, control signal output means for outputting conditioned simulator control signals, and attachment means for detachably attaching the signal interface unit to said vehicle simulator unit such that said control signal output means interface with signal input means of said vehicle simulator unit;
signal relay means arranged to relay simulator control signals between said remote simulation control means and said signal interface unit.

9. Apparatus according to Claim 8 in which said detachable signal interface unit further comprises:
response signal input means for receiving simulator response signals from signal output means of said vehicle simulator unit;
said signal conditioning means being operable to condition received simulator response signals in to a form compatible with said remote simulation control means; and,
response signal output means for outputting conditioned simulator response signals;
wherein said attachment means is arranged to detachably attach the signal interface unit to said vehicle simulator unit such that said response signal input means interfaces with said signal output means of said vehicle simulator unit.

10. Apparatus according to Claim 9 wherein said signal relay means is arranged to transfer said conditioned simulator response signals between said detachable signal interface unit and said remote simulation control means.

11. Apparatus according to any of claims 8 to 10 comprising a plurality of separate said detachable signal interface units wherein said signal relay means is operable to transfer simulator control signals and/or conditioned simulator response signals between said simulation control means and said plurality of separate detachable signal interface units.

12. Apparatus according to Claim 11 wherein said simulation control means is operable to provide vehicle simulator control signals simultaneously to at least some of said plurality of separate detachable signal interface units via said signal relay means thereby to control simultaneously a plurality of separate vehicle simulator units.

13. Apparatus according to Claim 12 wherein said remote simulation control means is operable to execute simultaneously or sequentially a plurality of different vehicle simulation computer program means corresponding to different vehicle simulation models, and to generate corresponding different simulator control signals thereby to control simultaneously or sequentially said plurality of separate vehicle simulator units according to said different simulation models.

14. Apparatus according to any of claims 8 to 13
wherein said signal relay means comprises one or more fibre-optic cables.

15. Apparatus according to any of claims 8 to 14
wherein said signal relay means comprises a digital communications network.

16. A method of vehicle simulation for use in a vehicle simulation system having a vehicle simulator unit for providing a vehicle simulation environment and simulation control means for generating vehicle simulator control signals remotely from said vehicle simulator unit wherein the method includes:
detachably attaching to signal input means of said vehicle simulator unit a signal interface unit being remote from said simulation control means;
generating simulator control signals at said remote simulator control means;
inputting said simulator control signals to said signal interface unit for signal conditioning thereby;
conditioning said input simulator control signals into a form compatible with said vehicle simulator unit;
outputting conditioned simulator control signals from said signal interface unit for input to said signal input means of said vehicle simulator unit thereby with said simulation control means to remotely control via said signal interface unit said simulation environment provided by said vehicle simulator unit.

17. A method according to Claim 16 further comprising:
receiving simulator response signals from signal output means of said vehicle simulator unit;
condition received simulator response signals in to a form compatible with said remote simulation control means; and,
outputting conditioned simulator response signals from said detachably attached signal interface unit for input to said remote simulation control means.

18. A method according to Claim 16 or 17 wherein said simulator control signals are input to, and/or said conditioned simulator response signals are output from, a plurality of separate said detachably attached signal interface units.

19. A method according to Claim 18 wherein said simulator control signals are input simultaneously to, and/or said conditioned simulator response signals are output simultaneously from, at least some of a plurality of separate signal interface units being detachably attached to separate respective vehicle simulator units thereby to control simultaneously a plurality of separate vehicle simulator units.

20. A method according to Claim 19 further comprising:
executing simultaneously or sequentially via said remote simulation control means a plurality of different vehicle simulation computer program means corresponding to different vehicle simulation models to generate corresponding different simulator control signals;
controlling simultaneously or sequentially said plurality of separate vehicle simulator units using said corresponding different simulator control signals.

21. A method according to any of claims 16 to 20
wherein said simulator control signals are input to, and/or said conditioned simulator response signals are output from, said plurality of separate detachably attached signal interface units via a digital communications network.

22. A detachable signal interface unit substantially as described in any one embodiment herein with reference to the accompanying drawings.

23. Apparatus for controlling a vehicle simulator unit substantially as described in any one embodiment herein with reference to the accompanying drawings.

24. A method of vehicle simulation substantially as described in any one embodiment herein with reference to the accompanying drawings.
